# EUROPÄISCHE PATENTANMELDUNG

(11) **EP 0 850 557 A1**
(43) Veröffentlichungstag der Anmeldung: **01.07.1998**
(21) Anmeldenummer: 96203688.5
(22) Anmeldetag: 23.12.1996
(51) Int. Cl.: A01F 15/07

(54) **Rundballenpresse mit Riemen**

(71) Anmelder: MAASLAND N.V., 3155 PD Maasland (NL)
(72) Erfinder: van der Lely, Olaf, 6312 Steinhausen (CH)
(74) Vertreter: Mulder, Herman

(57) **Zusammenfassung**

Eine Rundballenpresse für landwirtschaftliche Halmgüter besteht aus einem einen Einzugsspalt (10) aufweisenden und in seiner Grösse veränderlichen Ballenpressraum (5), welcher von mehreren, einzeln nebeneinander angeordneten, über Rollen (13, 16, 18) geführten Riemen gebildet wird. Um beim Pressen von bestimmten Gütern, z.B. Silage, die von einer Abstreifleiste (19) abgestreiften Materialteile aus den Riemenzwischenräumen zu entfernen, weisen die Riemen (12, 20) im Vordergehäuse (1) einen grösseren gegenseitigen Spaltabstand auf als die Riemen (15) des Hintergehäuses (3).

## Beschreibung

Die Erfindung betrifft eine Rundballenpresse nach dem Oberbegriff des Patentanspruches 1.

Rundballenpressen mit Riemen als Förder- und Presseinrichtung haben sich im praktischen Einsatz insbesondere auch bei kritischem Material wie sehr trockenem, sprödem Gerstenstroh erfolgreich bewährt. Es gilt vor allem bei Heu, Luzerne und anderen blattreichen Gütern Bröckelverluste zu vermeiden, die dadurch entstehen, dass während des Pressvorganges durch den jeweils von zwei benachbarten Riemen gebildeten Spalt Ernteguttelichen hinausfallen auf den Erdboden. Zur Lösung dieses Problems wird in der EP A1 0095 689 vorgeschlagen, die Spalte zwischen den Riemen zu minimieren.

Für das Verarbeiten von Silagegütern sind diese Pressen ohne zusätzliche, besondere Einrichtungen weniger geeignet, weil feuchte Halmgutteilchen an der den Ballen berührenden Riemenoberfläche ankleben bzw. anhaften und sich dieses Material beim Lauf der Riemen über die Rollen um diese wickelt und zu Störungen des Riemenlaufes führt. Das Wickeln von Material um die Rollen lässt sich beispielsweise durch feststehende oder rotierende Abstreifmittel vermeiden. Ferner wird in der EP B1 0070 537 beschrieben und dargestellt, benachbarte Riemen im Bereich der Umlenkrolle über der Pick-up durch zusätzliche Umlenkrollen in radialer Richtung gegeneinander zu versetzen, um Öffnungen zu schaffen, durch die das abgestreifte Material hinausfallen kann und sich nicht in dem Zwischenraum ansammelt, der von den den Ballen zugewandten und den dem Ballen abgewandten Riemenabschnitten gebildet wird.

Der Erfindung liegt die Aufgabe zugrunde, eine hinsichtlich der Riemenanordnung einfache und kostengünstige Rundballenpresse zu schaffen, die sowohl sehr trockene als auch feuchte Halmgüter störungsfrei und möglichst verlustfrei ohne zusätzliche Umlenkrollen verarbeitet.

Zur Lösung dieser Aufgabe wird erfindungsgemäss vorgeschlagen, dass die Rundballenpresse einen vorderen Riemensatz aufweist, der in einem Vordergehäuse angeordnet ist und einen hinteren Riemensatz, der in einem in eine Entladestellung aufklappbaren Hintergehäuse angeordnet ist, wobei wenigstens zwei benachbarte Riemen des einen Riemensatzes einen grösseren seitlichen Spaltabstand aufweisen als zwei benachbarte Riemen des anderen Riemensatzes.

Es hat sich in der Praxis gezeigt, dass die Wickelgefahr an der in Ballendrehrichtung gesehen letzten Umlenkrolle am grössten ist, weil diese von einem relativ langen Riemenabschnitt überlaufen wird, der vorher den Ballen berührte und presste und dann relativ viele Halmgutteile trägt, die die Umlenkrolle um sich wickeln möchte. In Verbindung mit den bekannten Abstreifmitteln schafft die neue Gestaltung der Rundballenpresse mit zwei Riemensätzen und durch die grösseren Spaltabstände eine sehr einfache Möglichkeit, dass von der Umlenkrolle abgestreiftes Material auf kürzestem Wege und ohne zusätzliche Fördermittel aus dem gefährdeten Bereich nach unten entfallen kann z.B. auf die darunter befindliche Pick-up. Durch die kleineren Riemenabstände derjenigen Riemen, die hinter dem Aufsammler das noch wenig verdichtete Material berühren, kann kaum Material hindurchtreten, so dass sowohl Bröckelverluste und Wickelerscheinungen vermieden werden. Die Ausführung ist einfach und kostengünstig und arbeitet bei allen Gutsarten und -beschaffenheiten deutlich besser als die am Markt z. Zt. angebotenen Rundballenpressen mit Riemen.

Je nachdem, welche Ballendrehrichtung in der Rundballenpresse gewählt wurde, liegt die kritische Umlenkrolle, also die, die am längsten mit dem ballenberührenden Riemenabschnitt in Verbindung steht, entweder im Vordergehäuse oder im Hintergehäuse. Läuft der dem Ballen zugewandte Riemenabschnitt im Vordergehäuse während des Betriebes z.B. nach unten, weisen die im Vordergehäuse angeordneten Riemen einen grösseren seitlichen Abstand zueinander auf. Das hat den Vorteil, dass abgestreiftes Material auf die Pick-up fallen kann und wieder mit in den Ballen gewickelt wird. Liegt die kritische Umlenkrolle im Hintergehäuse, weisen entsprechend dessen Riemen einen grösseren seitlichen Abstand auf.

Eine besonders kostengünstige Ausführung wird dann erreicht, wenn in dem betreffenden Riemensatz wenigstens ein Riemen weniger als in dem anderen angeordnet ist. Optimale Verhältnisse ergeben sich dann, wenn die Spaltbreite zwischen zwei benachbarten Riemen etwa ein Drittel der Breite eines Riemens entspricht. Einerseits sind dann die Spaltöffnungen zum Hinausfallen des abgestreiften Materials günstig, andererseits ist die am Ballen wirksame Riemenoberfläche noch gross genug, um eine sichere Ballendrehung zu gewährleisten und das Material zu verdichten.

Hinsichtlich weiterer Ausgestaltungen wird auf die übrigen Unteransprüche verwiesen.

In der Zeichnung sind zwei Beispiele des Erfindungsgegenstandes dargestellt. Hierbei zeigt:
Figur 1 einen Längsschnitt durch eine Rundballenpresse in schematischer Darstellung;
Figur 2 eine Teildarstellung des Riemensatzes im Vordergehäuse der Rundballenpresse gemäss Figur 1 in Pfeilrichtung A gesehen;
Figur 3 eine Teildarstellung des Riemensatzes im Hintergehäuse der Rundballenpresse gemäss Figur 1 in Pfeilrichtung B gesehen und
Figur 4 eine zweite Ausführungsform eines Riemensatzes im Vordergehäuse der Rundballenpresse gemäss Figur 1 in Teildarstellung in Pfeilrichtung A gesehen.

Die Rundballenpresse besitzt ein zweiteiliges Pressraumgehause, bestehend aus einem Vordergehäuse 1, welches gestellfest auf einem Fahrgestell 2 ruht und einem Hintergehäuse 3, welches um eine obere Schwenkachse 4 in eine nicht dargestellte Entladestellung aufklappbar ist.

Im Pressraumgehäuse 1, 3 wird ein Ballenpressraum 5, dessen Durchmesser sich bei der Herstellung eines Ballens vergrössern kann, unten von einer Bodenwalze 6 und oben durch einen vorderen Riemensatz 7 sowie einen hinteren Riemensatz 8 begrenzt.

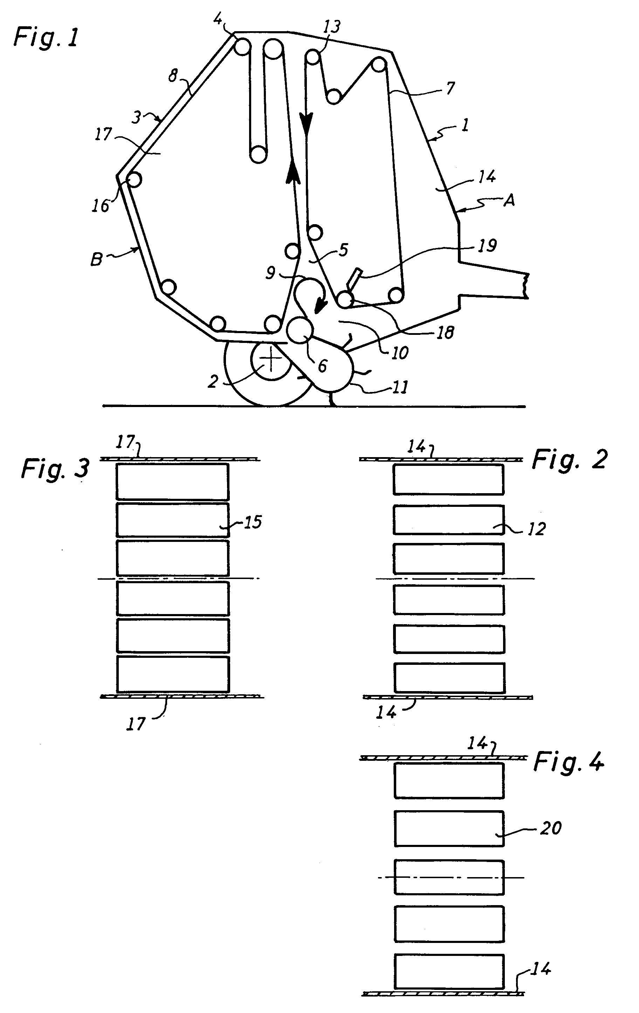

Die Bodenwalze 6 und die Riemensätze 7, 8 werden während der Ballenherstellung in einer gemeinsamen Umlaufrichtung 9 angetrieben. Zwischen Bodenwalze 6 und Unterseite des vorderen Riemensatzes 7 ist ein Einzugsspalt 10 freigelassen. Vor und unterhalb dieses Spaltes 10 ist eine Aufsammeltrommel 11 gelagert. Der vordere Riemensatz 7, siehe Figur 2, besteht aus sechs nebeneinander angeordneten Riemen 12, die z.B. jeweils eine Breite von 155 mm aufweisen und über Umlenkrollen 13 geführt sind, die zum Teil ortsfest aber drehbar und zum Teil nachgiebig in vorderen Seitenwandabschnitten 14 des Vordergehäuses 1 gelagert sind, die den Ballenpressraum 5 beidseitig in axialer Richtung begrenzen. Bei einer lichten Breite zwischen den Seitenwandabschnitten 14 von z.B. 123 cm ergibt sich bei gleichmässiger Riemenverteilung über die Breite des Pressraumes 5 ein Spaltabstand von knapp 6 cm zwischen zwei benachbarten Riemen 12, wobei die Riemen 12 möglichst geringen Abstand (1 cm) von den Seitenwandabschnitten 14 aufweisen sollen, um hier Materialeinzug zu vermeiden.

Der hintere Riemensatz 8, siehe Figur 3, besteht aus sechs nebeneinander angeordneten Riemen 15, die z.B. jeweils eine Breite von 185 mm aufweisen und über Umlenkrollen 16 geführt sind, die zum Teil ortsfest aber drehbar und zum Teil nachgiebig in hinteren Seitenwandabschnitten 17 des Hintergehäuses 3 gelagert sind, die den Ballenpressraum 5 beidseitig in axialer Richtung begrenzen. Bei einer lichten Breite zwischen den Seitenwandabschnitten 17 von z.B. 123 cm ergibt sich bei gleichmässiger Riemenverteilung ein Spaltabstand von nur ca. 15 mm zwischen zwei benachbarten Riemen 15, so dass durch diese kleinen Spalte kein Material gelangen kann.

Die untere Umlenkrolle 18 des vorderen Riemensatzes 7 ist mit einer an sich bekannten Abstreifleiste 19 versehen.

Während des Pressbetriebes streift diese Abstreifleiste 19 Material von der Umlenkrolle 18 ab, so dass sich kein Material auf dieser aufbauen kann. Durch die grossen Spaltabstände des vorderen Riemensatzes fällt dieses abgestreifte Material direkt nach unten vor die Aufsammeltrommel 11 und wird von dieser erneut aufgenommen.

Figur 4 zeigt eine zweite Ausführungsform der Erfindung. Das Hintergehäuse 3 weist eine Riemenanordnung gemäss Figur 3 auf. Im Vordergehäuse 1 werden die gleichen Riemen wie im Hintergehäuse 3 (Riemen 15) benutzt, jedoch sind nur fünf Riemen 20 vorgesehen, so dass sich eine Spaltbreite zwischen zwei benachbarten Riemen von 70 mm ergibt bei einer Riemenbreite von 186 mm.

Bei Rundballenpressen mit umgekehrter Ballendrehrichtung, also in zu Pfeil 9 entgegengesetzter Drehrichtung, weist das Vordergehäuse 1 eine Riemenanordnung gemäss Figur 3 auf, während das Hintergehäuse 3 eine Riemenanordnung gemäss Figur 2 oder Figur 4 aufweist. Hier ist der Reinigungseffekt durch das Öffnen und das Schliessen des Hintergehäuses 3 besonders vorteilhaft, jedoch wird das hinausgefallene Material nicht mehr von Aufsammlertrommel 11 aufgenommen.

## Patentansprüche

1. Rundballenpresse für landwirtschaftliche Halmgüter, bestehend aus einem einen Einzugsspalt (10) aufweisenden und in seiner Grösse veränderlichen Ballenpressraum (5), welcher von mehreren, einzeln nebeneinander angeordneten, über Rollen (13, 16, 18) geführten Riemen gebildet wird, dadurch gekennzeichnet, dass die Rundballenpresse einen vorderen Riemensatz (7) aufweist, der in einem Vordergehäuse (1) angeordnet ist und einen hinteren Riemensatz (8), der in einem Hintergehäuse (3) angeordnet ist, wobei wenigstens zwei benachbarte Riemen (12, 20) des einen Riemensatzes einen grösseren seitlichen Spaltabstand aufweisen als zwei benachbarte Riemen (15) des anderen Riemensatzes.

2. Rundballenpresse nach Anspruch 1, dessen dem Ballenpressraum (5) zugewandter Riemenabschnitt im Vordergehäuse (1) während des Betriebes nach unten läuft, dadurch gekennzeichnet, dass die im Vordergehäuse (1) angeordneten Riemen (12, 20) einen grösseren seitlichen Abstand zueinander aufweisen.

3. Rundballenpresse nach Anspruch 1, dessen dem Ballenpressraum zugewandter Riemenabschnitt im Vordergehäuse (1) während des Betriebes nach oben läuft, dadurch gekennzeichnet, dass die im Hintergehäuse (3) angeordneten Riemen einen grösseren seitlichen Abstand aufweisen.

4. Rundballenpresse nach einem der Ansprüche 1 bis 3, dadurch gekennzeichnet, dass zur Erzielung eines grösseren Spaltabstandes in dem betreffenden Riemensatz (7) wenigstens ein Riemen (20) weniger als in dem anderen angeordnet ist.

5. Rundballenpresse nach einem der Ansprüche 1 bis 3, darurch gekennzeichnet, dass zur Erzielung eines grösseren Spaltabstandes in dem betreffenden Riemensatz (7) wenigstens ein Riemen (12) kleinerer Breite angeordnet ist.

6. Rundballenpresse nach einem oder mehreren der vorhergehenden Ansprüche, dadurch gekennzeichnet, dass der andere Riemensatz als geschlossene Bahn ausgebildet ist.

7. Rundballenpresse nach einem oder mehreren der vorhergehenden Ansprüche, dadurch gekennzeichnet, dass die Spaltbreite zwischen zwei benachbarten Riemen (12, 20) etwa ein Drittel der Breite eines Riemens (12, 20) entspricht.

8. Rundballenpresse nach einem oder mehreren der vorhergehenden Ansprüche, dadurch gekennzeichnet, dass wenigstens einer der Rollen (18) Abstreifmittel, wie z.B. ein Schneckenförderer oder eine Abstreifleiste (19) zugeordnet sind, um um die Rolle (18) gewickeltes Material abzustreifen.

9. Rundballenpresse nach einem oder mehreren der vorhergehenden Ansprüche, dadurch gekennzeichnet, dass das Hintergehäuse zur Entladung aufklappbar ist.
